# EUROPEAN PATENT SPECIFICATION

(11) **EP 3 278 020 B1**
(45) Date of publication and mention of the grant of the patent: **29.12.2021**
(21) Application number: 16769793.7
(22) Date of filing: 25.03.2016
(51) Int. Cl.: A01G 7/04

(54) **METHOD AND APPARATUS FOR STIMULATION OF PLANT GROWTH AND DEVELOPMENT WITH NEAR INFRARED AND VISIBLE LIGHTS**
VERFAHREN UND VORRICHTUNG ZUR STIMULIERUNG DES PFLANZENWACHSTUMS UND DER PFLANZENENTWICKLUNG MIT LICHT IM NAHINFRAROT- UND SICHTBAREN BEREICH
PROCÉDÉ ET APPAREIL POUR LA STIMULATION DE LA CROISSANCE ET LE DÉVELOPPEMENT DES PLANTES AVEC DES LUMIÈRES VISIBLE ET PROCHE INFRAROUGE

(30) Priority: 25.03.2015 US 201562138132 P
(43) Date of publication of application: 07.02.2018
(73) Proprietor: Vitabeam Ltd., London W1U 2NT (GB)
(72) Inventor: VASILENKO, Vladimir, Martintown, ON K0C 1S0 (CA)
(74) Representative: Berggren Oy
(86) International application number: PCT/US2016/024293
(87) International publication number: WO 2016/154570

(56) References cited:
- GB-A- 2 303 533
- US-A1- 2007 058 368
- US-A1- 2010 020 536
- US-A1- 2010 020 536
- US-A1- 2012 043 907
- US-A1- 2013 107 512
- US-A1- 2014 313 713
- US-B1- 8 882 291
- US-B2- 8 738 160
- ADAMS: 'DIY LED GROW LIGHTS - REVISTED (AND NOW AFFORDABLE!)', [Online] 17 December 2013, pages 1 - 14, XP055491087 Retrieved from the Internet: <URL:WWW.EARTHINEER.COM/BLOG/22893/DIYLEDGR OWLIGHTSREVISTEDANDNOWAFFORDABLE>
- 'Programmable logic relays Kinco' LOVATO ELECTRIC, [Online] 01 September 2008, pages 1 - 8, XP055491837 Retrieved from the Internet: <URL:WWW.LOVATOELECTRIC.COM/DOWNLOAD/PD09GB 09_08.PDF>

## Description

This invention is generally related to providing growth light for horticultural and agricultural plants. More specifically the invention is related to a method for stimulation of plant growth and a device for stimulating plant growth by illuminating plants using NIR.

### BACKGROUND

Infrared light is invisible "black" light and it is a part of the sunlight spectrum. Infrared light lies between the visible and microwave portions of the electromagnetic spectrum. Infrared light has a range of wavelengths, just like visible light has wavelengths that range from red light to violet. Infrared light can be divided into 'near infrared' and 'far infrared' regions. "Near infrared" light is closest in wavelength to visible light and "far infrared" is closer to the microwave region of the electromagnetic spectrum. Near infrared light consists of light just beyond visible red light in the wavelength region 750 nm -1400 nm. Far infrared waves are thermal, while near infrared waves are not. In other words, we experience infrared radiation every day in the form of heat. People, animals and many nonliving things emit infrared light - the Earth, the Sun, and far away objects like stars and galaxies do also. However, the significance of near infrared radiation (NIR) on the Planet has remained a mystery even for scientists until now.

Over the course of nearly two decades the inventor has been developing the theory and practice of application of infrared light in different areas of biology, agriculture, food production and storage of perishable products. His recent work opens a new vision to understanding the effects of NIR on living organisms. Now it is becoming clear that NIR is a messenger for some important information processes in plants and animals.

NIR affects the bio-organism at different levels. Electromagnetic impact of NIR influences at the tissue and organ level and causes the following effects:
1. Trigger of unknown infrared-light receptor and its transduction chain;
2. Influx of ions in the cells;
3. Increase of the respiration rate;
4. Change of phytohormones levels; and
5. Altered Gene expression - metabolism, growth and other macro-effects.

NIR works on the quantum level (effects the atomic and molecular level) as well as on the level of cells and tissues in plants.

Use of near infrared light is known to improve seed germination. UK patent GB 2 303 533 discloses treatment of seeds with near infrared light optionally in combination with red light. Typically treatment of seed with wavelengths ranging from 800 to 1000 nm improved germination of seeds of various horticultural plant species. Moreover the vigor of the seedlings was improved when the seeds were illuminated with the NIR. Typical duration of the illumination was 1 to 10 minutes.

Illuminating *Avena* -seedlings with 935 nm or 880 nm NIR continuously for 120 hours from planting have also been shown to have effect on the plant development (C.F. Johnson et. al.; Photochem. Photobiol. 1996, 63(2): 238-242). Seedlings grown in the presence of 880 nm irradiation were shorter and had a lower percentage of mesocotyl tissue compared to seedlings grown in darkness (no irradiation), while seedlings grown under 935 nm had less mesocotyl tissue and more coleoptile tissue than those grown without any irradiation.

Accordingly, it seems that near infrared light may have an active role in plant development, even if it has been postulated that because near infrared is outside the visible and far red regions of the electromagnetic spectrum, it would have no effects on plants. Actually, it has been proposed that near infrared light is harmful for plants (JP 2011000012) and therefore for example the Japanese patent application JP 2011000012 discloses a lighting system where the near infrared portion of the spectrum is specifically directed away from the plants.

US 2010/020536 A1 discloses a lighting system comprising a first LED array with a plurality of LED sub-arrays, and a plurality of inputs operatively coupled to a corresponding LED sub-array through a controller. US 2013/107512 A1 discloses a LED plant light comprising an optical reflector, a LED illuminant, and a diffuser assembled to the bottom of the optical reflector. US 8 738 160 B2 discloses a method and apparatus for metabolism manipulation of life forms using spectral output which comprises at least one array of LED light sources which have metabolic manipulating spectral emissions.

Near infrared light does not significantly affect the temperature of the plant tissues, so there is no direct relationship between temperature and the effects of NIR on plants. Healthy vegetation absorbs blue-light and red-light energy to fuel photosynthesis and create chlorophyll. A plant with more chlorophyll will reflect more near-infrared energy than an unhealthy plant. Thus, analyzing a plant's spectrum of both absorption and reflection in visible and in infrared wavelengths can provide information about the plant's health and productivity.

Accordingly, the role of near infrared light in plant growth and development is somewhat unclear even if there are indications showing that near infrared light may have effects on plant growth and development. Many parties believe that NIR could inhibit plant growth; this is contrary to the surprising findings of this disclosure. Consequently, near infrared light is not used in commercial plant growth lighting systems. Moreover, the combination of visible light and near infrared light has not been tested. Nor has continuous NIR illumination been even considered as an option, perhaps partially due to the accepted notion of it being 'useless' or even 'harmful'.

Commercial plant cultivation in green houses is a major industrial activity of today's world. Year round production of vegetables, fruits and flowers is an expected standard. Also local production is a trend that is appreciated highly today. Accordingly, it has become necessary to produce plants in green houses and under artificial light to satisfy the consumers. Given that energy costs are high, the producers naturally look forward to any solutions that would increase the production without compromising quality. For these reasons there is a continuous need of lighting systems to improve plant productivity and health.

This invention provides methods and devices to increase the production of plants in greenhouse and in other artificially lit building environments.

### SUMMARY

Generally this disclosure solves the problems described above and others not explicitly stated by using the method and device disclosed herein.

The first object of the present invention is a method for stimulation of plant growth. Characteristic steps of said method are depicted in claim 1.

The second object of the present invention is a device for stimulating plant growth by illuminating plants using NIR. Characteristic features of said device are depicted in claim 7.

In addition one object of this disclosure is to provide a method for stimulation of plant growth and production, which method comprises illuminating the plants with near infrared light from one or more LED / OLED (Organic Light Emitting Diodes) elements or other light generating technologies, with near infrared irradiation (NIR) in a range from 840 nm to 960 nm.

It is another object of this disclosure to provide a method for stimulation of plant growth and production, which method comprises illuminating the plants with near infrared irradiation (NIR) from one or more LED elements, with near infrared light wavelengths ranging from 840 nm to 960 nm preferably for at least 2 hours per day, more preferably in 8, 12 or 16 hour cycles. Continuous NIR illumination is also possible.

It is yet another object of this disclosure to provide a method for stimulation of plant growth and production, which method comprises illuminating the plants with near infrared light from one or more LED elements and simultaneous illumination with photosynthetically active radiation (PAR) and optionally combination of various wave lengths selected from the white light spectrum of 380 nm -700 nm emitted from one or more LED elements.

It is still another object of this disclosure to provide a method for stimulation of plant growth and production, which method comprises illuminating the plants with near infrared light from one or more LED elements with near infrared light in a range from 840 to 960nm, and simultaneous illumination with a combination of warm white light (3000- 3500K) and cool white light or daylight (5000- 7000K) of the wavelengths range 400 nm- 700 nm.

A further object of this disclosure is to provide a method for stimulation of plant growth and production which method comprises illumination with near infrared and selected combinations of wavelengths from white light spectrum such as 380 nm, 450 nm, 600 nm, and 660 nm, wherein the radiant output of the near infrared LED elements is at least 5% of the total radiant output.

Yet another object of this disclosure is to provide a method for stimulation of plant growth and production which method comprises illumination with near infrared and selected combinations of wavelengths from white light spectrum, wherein the radiant output of the near infrared LED elements is at least 5% of the total radiant output, and the selection of wavelengths is a combination of UV-A, UV-B, violet, blue, green, orange and red colors of the wavelengths range 400 nm to 700 nm.

It is yet another object of this disclosure to provide a method and device to improve *in vitro* plant propagation by illuminating the explants transferred on culture medium with a combination of near infrared and selected combinations of wavelengths from white light spectrum such as 450 nm, 660 nm and 730 nm. UV A and/or UV B light may be added to the combination.

Another object of this disclosure is to provide a method and device to enhance, stimulate and prolong plant flowering by illuminating the plants with a combination of near infrared and selected wavelengths from the white light spectrum.

Still another object of this disclosure is to provide a method and device to stimulate growth and production of medical cannabis by illuminating the plants with a combination of near infrared, red light and blue light. The light selection may also be amended by UV-B and/or UV-A irradiation.

Still another object of this disclosure is to provide a device for illuminating plants using NIR wavelengths in spectrum, wherein the device comprises one or more LED elements and a power for the LED elements, wherein said LED-elements comprise a near infrared LED element, wherein an infrared LED element within a range from 840 nm to 960 nm.

It is another object of this disclosure to provide a device for illuminating of *in vitro* plantlets using NIR in combination with selected combination of wavelengths from the white light spectrum.

A further object of this disclosure is to provide a device for illuminating of plants using NIR light, wherein the device comprises one or more LED elements and a power for the LED elements, wherein said LED-elements comprise a near infrared LED elements and white light elements, and wherein the white and near infrared LED-elements are included in an alternating manner preferably in an elongated panel or string in the direction of elongation.

Yet another object of this disclosure is to provide a device for illuminating plants using NIR, wherein the device comprises one or more LED elements and a power for the LED elements, wherein said LED-elements comprise near infrared LED elements and white light elements, and wherein the white and near infrared LED-elements are included in an alternating manner in a preferably elongated panel or string in the direction of elongation and wherein the number of white light LED elements in the device is larger than the number of near infrared-elements.

It is another object of this disclosure to provide a device for illumination of plants using NIR, wherein the device comprises one or more LED elements and a power for the LED elements, wherein said LED-elements comprise infrared LED elements and white light elements, and wherein the white and near infrared LED-elements are included in alternating manner in a preferably elongated panel or string in the direction of elongation, and wherein the radiant output of the near infrared LED elements is in 5% to 25% range of the total radiant output.

A further object of this disclosure is to provide a device for illuminating plants using NIR wavelengths in the spectrum in combination with other colors of photosynthetically active radiation (PAR), wherein the device allows for tuning the light spectrum in accordance with plant's needs based on its developmental stage or based on time of the dark/light cycle allowing more red or blue or near infrared rays in the spectrum.

Yet another object of this disclosure is to provide a device for illuminating plants using NIR wavelengths in spectrum in combination with other colors of PAR, wherein the device allows to tune the light spectrum in accordance with natural daily changing of the sunlight spectrum that automatically change the percentage of red, blue, green or infrared wavelengths in the spectrum or turns the light on and off in accordance with time of a day for 24 hour cycle.

These and other embodiments will be better understood in conjunction with the drawings and description that follow.

### A BRIEF DESCRIPTION OF THE DRAWINGS

Various aspects of the disclosure will now be described, by way of example, with reference to the accompanying drawings, in which:
Fig. 1 shows reflectance of healthy and unhealthy vegetation. It can be seen that in the NIR region the unhealthy plants reflect much less than the healthy plants. This means that the absorption of NIR wavelengths is higher by unhealthy plants than the healthy ones. Unhealthy plants may absorb up to 60% of the NIR region light depending on the degree of their damage.
Fig. 2 shows the typical spectrum of commercially available grow lights. The current level of technology provides lighting systems that lack green and yellow lights and none of the current systems include NIR.
Fig. 3 shows an example of spectrum of grow lights according to an aspect of this disclosure. The spectrum includes cool white (5000K) and warm white (3500K) LED and near infrared LED elements emitting between 875 and 975nm with a peak around 930 nm.
Fig. 4 shows an example of a spectrum and radiant output according to one aspect near infrared LED elements of this disclosure. The LED emits between 775 and 925nm with peak at 850nm.
Fig. 5 shows an example of a spectrum and radiant output of standard near infrared LED with peak emission at 880nm and a point source emitter similarly with a peak at 880nm, both of which may be used in the device and method of this disclosure.
Fig. 6 shows an example of spectrum and radiant output of one embodiment of cool white LED element of this disclosure. These elements are used in combination of near infrared LED elements (e.g. figures 4 and 5) and/or with warm white LED elements (e.g. Figure 7).
Fig. 7 shows an example of spectrum and radiant output of one embodiment of warm white LED element of this disclosure. These elements are used in combination of near infrared LED elements (e.g. Figures 4 and 5) and/or with cool white LED elements (e.g. Figure 6).
Fig. 8 shows an example of one embodiment of the disclosure where the white light comprises spectra emitted from a number of LED elements of various color of the PAR spectrum and the NIR is emitted from several near infrared LED elements with different wavelengths.
Fig. 9 shows an example of a grow light device according to this disclosure. The device comprises of near infrared LED elements and white color LED elements where the white color LED elements may emit the same or different wavelengths, which may be cool white LED elements emitting spectra such as in Figure 6 or may be warm white color LED emitting a spectra such as in Figure 7.
Fig. 10 shows an embodiment of the grow light device according to this disclosure. The device comprises near infrared LED elements and white color LED elements and the device is flexible.

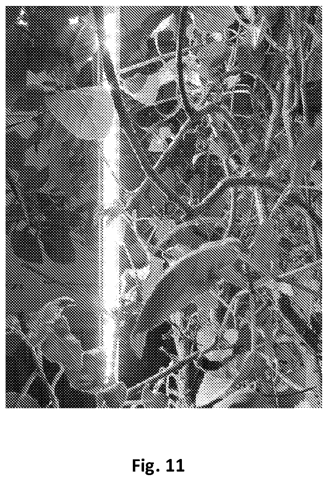

Fig. 11 shows a hybrid NIR/LED such as shown in Figure 9 inside a canopy of Fuchsia plants.
Fig. 12 shows the effect of NIR and photosynthetically active radiation for growth rates of seedlings of various plant species. The curve represents typical results obtained with tomato, wheat, corn, geranium and fuchsia seedlings.

### DETAILED DESCRIPTION

### Definitions

By far infrared it is meant wavelengths above 1400 nm.

By near infrared it is meant wavelengths 750-1400 nm.

By visible lights it is meant wavelengths 390-750 nm.

By photosynthetically active radiation (PAR) it is meant wavelengths 400-700 nm.

By blue light it is meant wavelengths 380-495 nm.

By ultraviolet light it is meant wavelengths 10-380 nm.

By ultraviolet A light it is meant wavelengths 350-400 nm.

By ultraviolet B light it is meant wavelengths 280-315 nm

By orange light it is meant wavelengths 590-620 nm.

By red light it is meant wavelengths 600 -700 nm.

By far red light it is meant wavelengths 700-750 nm.

By green light it is meant wavelengths 495-590 nm.

By yellow light it is meant wavelengths 570-590 nm.

By cool white light it is meant the light with correlated color temperatures^{∗} of 5000-6000K.

By warm white light it is meant the light with correlated color temperatures of 2700-3500K.

*Correlated Color temperature (CCT) in lighting describes how the color of the light appears from a lamp, measured in Kelvins (K).

In the present context, the terms 'LED', 'LED element' and 'light emitting diode' are used interchangeably and refer to light emitting diodes in all known forms, be it inorganic, organic, point-like, or line-like. In one aspect of the disclosure, the LEDs are wide angle elements, which refer to LEDs which deliver evenly spread light rather than spotlights. The LEDs may be used in high power output and emit continuously.

The present disclosure relates to a method for growing plants with usage of artificial LED light. The method comprises providing a lighting system to illuminate a plant with a combination of near infrared and visible light. Compared to other types of grow lights, the method and device of this disclosure helps the plants to grow much faster because of their unique spectra. There are multiple absorption peaks for chlorophyll and carotenoids and phytochrome, and the light and device of this disclosure (herein called Vitabeam GROW^{™}) employ the special wavelengths rays overlapping these peaks. The device emits the wavelengths of light corresponding to the absorption peaks of a plant's typical photochemical processes.

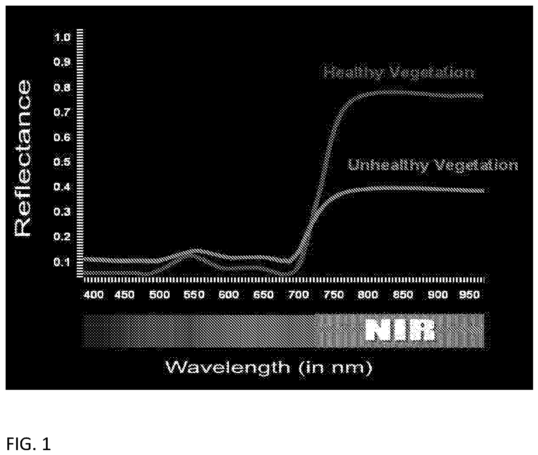

Near Infrared light has been vastly used for remote sensing. Remote sensing has been used for the detection of vegetation, stage of growth and health of the vegetation. Healthy plants can be identified by using the near infrared spectrum because they reflect most of it (around 80%), whereas unhealthy plants reflect much less NIR. Thus, plant stress is indicated by progressive decrease in NIR reflectance. This is schematically shown in Figure 1. Based on this information it seems that the green plants need NIR light for certain physiological and biochemical processes related to their growth, development and for reparation of damaged tissues. This is why unhealthy plants need more near infrared light; as less of it is emitted. NIR activates metabolism in plants and their damaged tissues, possibly, in a similar way as it probably does in animals and human tissues. One of the mechanisms of NIR action involves the cell's respiration system located in the mitochondria. However, as discussed above NIR has been considered as 'useless' or even 'harmful' for plants.

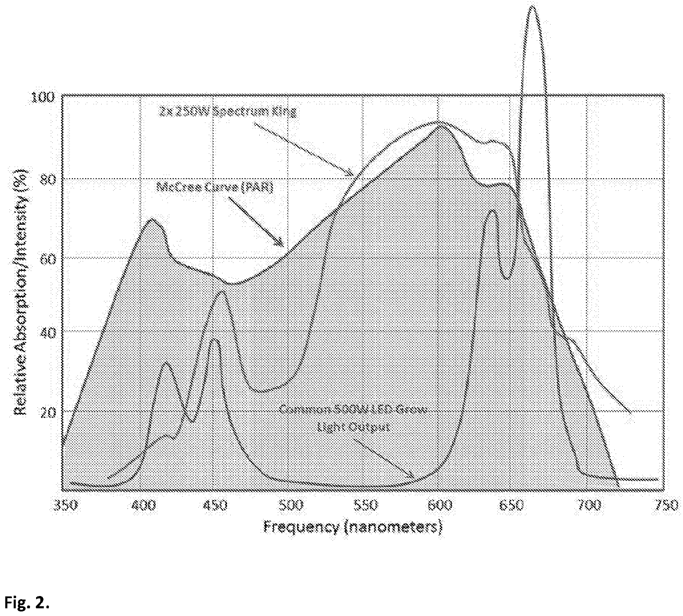

Photosynthetically active pigments absorb red light between about 600 and 700 nm. Phytochromes are known to be essential for plant sensing of light and they absorb red and far red light (around 750 nm). Some plant pigments absorb light in the blue light region. Green light is known to be the least active of the visible light. For these reasons grow lights provided for plants usually have a spectrum including blue and red lights, sometimes far red light, and usually no green light wavelengths. Figure 2 shows a typical spectrum of commercially available lighting systems. No specific pigment is known to absorb NIR.

More recently there has been research showing that plants at different developmental stages grow better with different red/blue ratios. WO 2013/188303 shows a lighting system where the ratio of red and blue can be modified depending on the developmental stage of the plant.

There are no commercially available lighting systems or any disclosures showing use of NIR emission in combination of color spectrum selected from the white light spectrum. Nor is a system disclosed where the color spectrum would change over the course of the day while maintaining the level of NIR throughout the illumination period or selected parts of the illumination period.

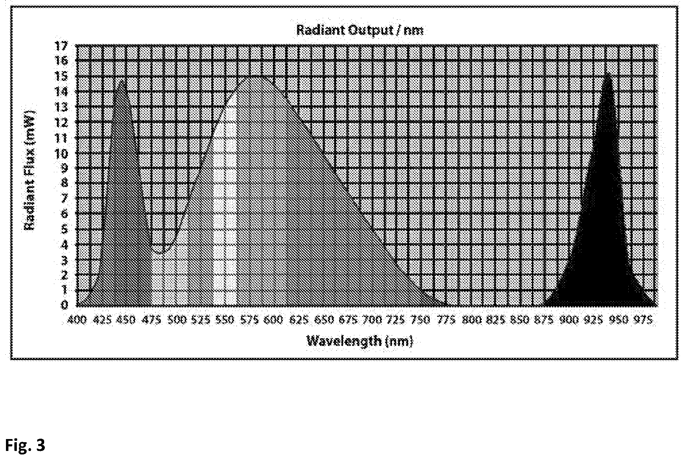

This disclosure provides a lighting system where NIR is an essential part of the spectrum. Referring to Figure 3, an example of spectrum of grow lights according to this disclosure is provided. The spectrum includes cool-daylight white (5000- 7000K) and warm white (3000-3500K) LED and near infrared LED elements emitting between 875 and 975 nm with a peak around 930 nm. The NIR wavelengths may also be between 800nm and 900 nm or between 800 nm and 950nm.

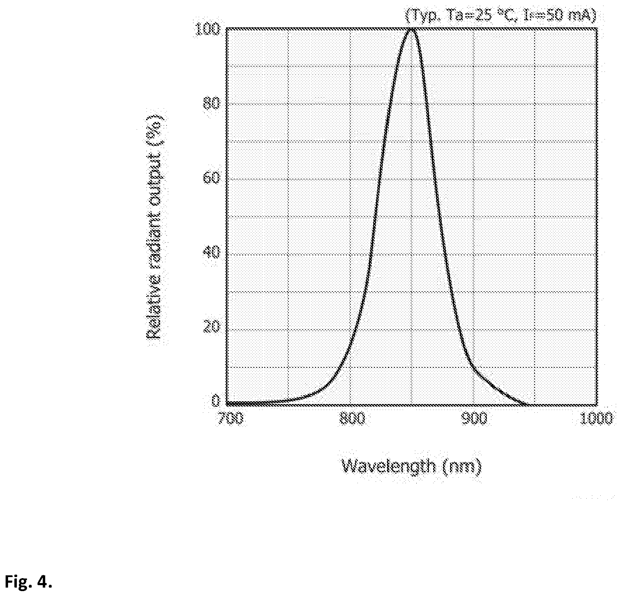

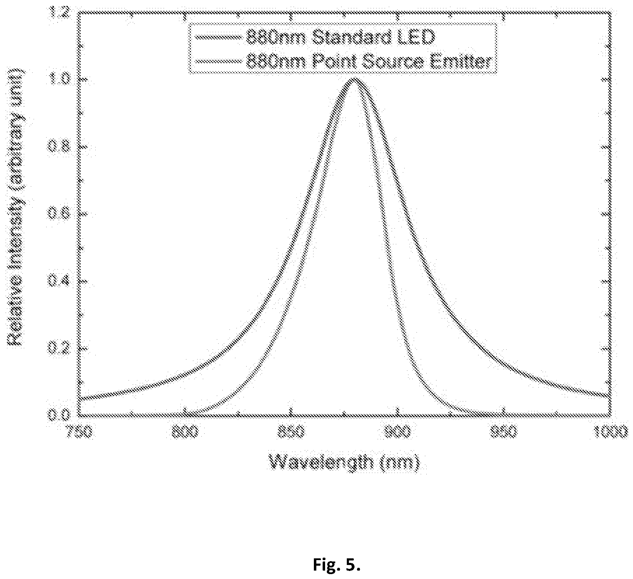

The NIR emission may be provided by a near infrared LED element having an emission spectrum as is shown in Figure 4, with a peak at 850 nm. The NIR emission may be provided by a near infrared LED with peak at 880 nm or by a source emitter with a peak at 880 nm, as is shown in Figure 5.
The NIR emission peak may be in between wavelengths 850 and 960nm.

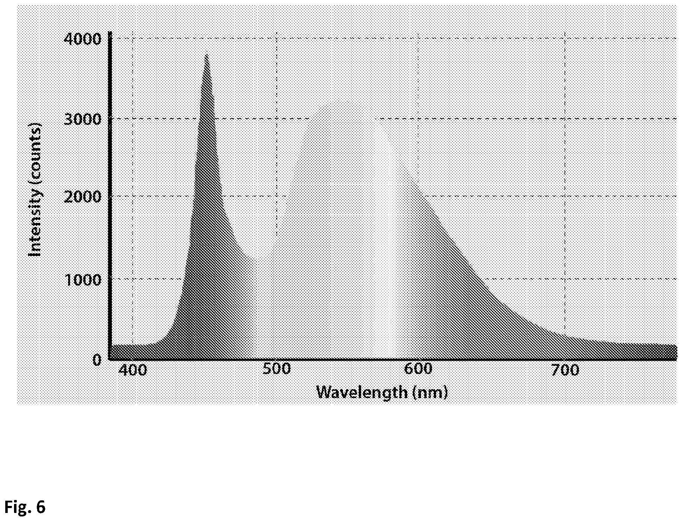

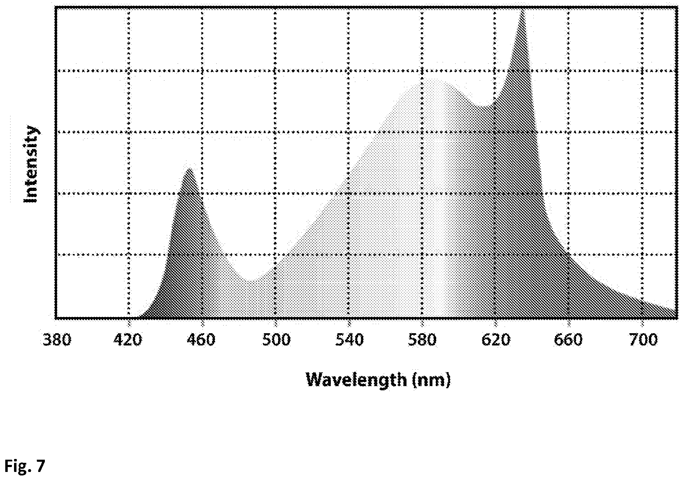

The lighting system of this disclosure additionally has a visible light spectrum, which may be as is shown in Figure 6 where the visible spectrum is cool white spectrum (wavelengths between 380 nm and 750 nm.) or as is shown in Figure 7 where the visible spectrum is warm white spectrum (wavelengths between 420 and 720 nm). As an example, a combination of two spectra (two types of white LED lights) gives the "universal" spectrum that fits to the most requirements for plant photosynthesis, optimal growth and yield.

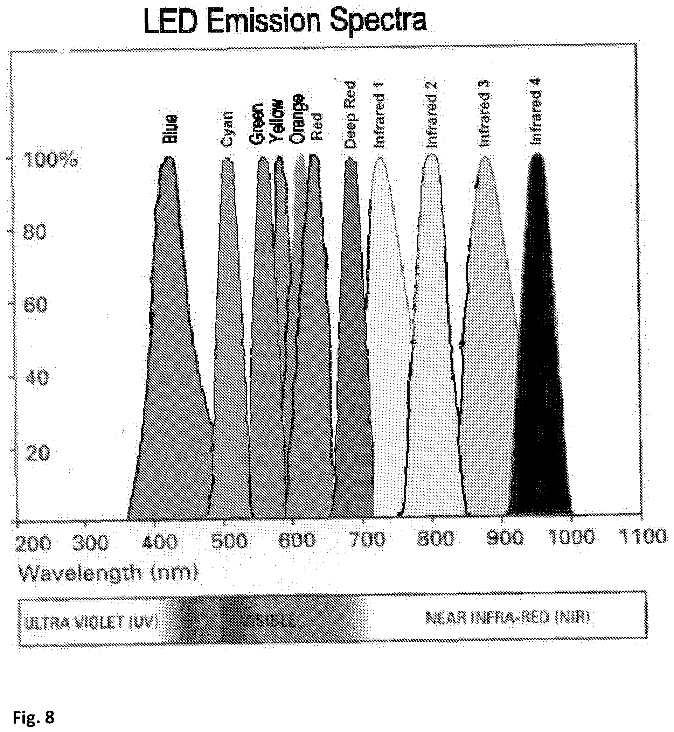

The visible spectrum may be also composed of spectra emitted from a number of LED elements of various colors of PAR spectrum such as shown in Figure 8. Similarly the NIR spectrum may be composed of NIR emitted from various near infrared LEDs with different peak wavelengths as are shown in Figure 8 for example.

In some aspects of the disclosure the lighting system of this disclosure may also include ultraviolet light. The ultraviolet light may be at wavelengths of 350 to 400 nm. In some aspects ultraviolet B light may be included with or without ultraviolet A light.

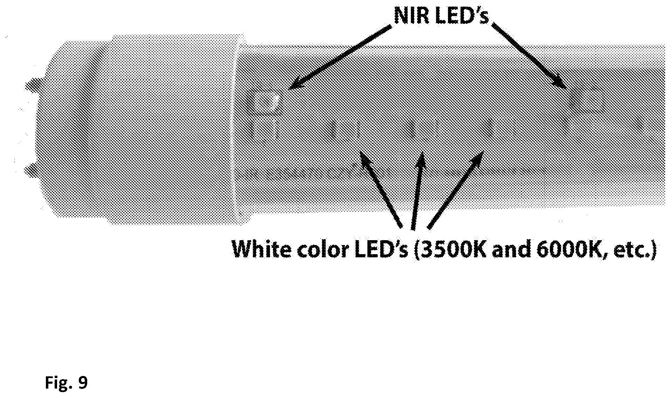

In reference to Figure 9, the grow light device according to this disclosure may be a LED tube comprised of one or more near infrared LEDs and one or more white color LEDs. Preferably the number of white color LEDs is larger than the number of near infrared LEDs.

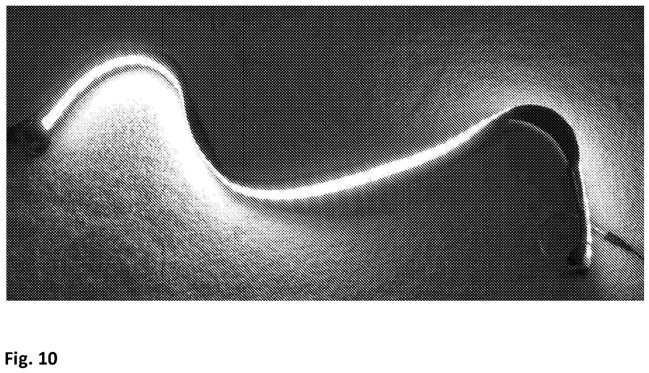

Figure 10 shows a variation of the device where the grow light device is made on a flexible material. This allows locating the light inside a plant canopy and allows using the device in small or irregular spaces. According to one aspect the color LEDs and near infrared LED elements are included in the device in an alternating manner in an elongated panel or a string in the direction of elongation.

The number of near infrared LED elements and the number of white light LED elements in the device may vary depending on the form of the device and the application for which they are used. In one aspect, the number of white light LED elements is larger than the number of near infrared LED elements.

The ratio of white light LED elements to near infrared LED elements may vary depending on the application and the form of the device. Preferably the number of white light LED is 4 to 20 times larger than the number of near infrared LED elements. In some aspects the number of white light LED is 5-15 times larger than number of near infrared LED elements. In one aspect of the disclosure number of colored LED elements, such as blue, yellow, green, and red, is 4 to 20 times larger than the number of near infrared LED elements. In some aspects the number of colored LED is 5-15 times larger than number of near infrared LED elements.

The power output of the LEDs may be adjusted in any convenient way. In one embodiment, the output is adjusted per type of specific wavelength. The radiant output of the LEDs is preferably at least 10 mW, more preferably, it is at least 50 mW, at least 100 mW, at least 500 mW or at least 1 W. More preferably, the LEDs are high power LEDs with a radiant output of at least 5 W, at least 10 W, at least 15 W, at least 20 W, at least 25 W, at least 30 W, at least 35 W or at least 40 W. In one embodiment, the LEDs are high power LED elements with a light intensity of at least 100 mW/cm², at least 200 mW/cm², at least 300 mW/cm², at least 400 mW/cm², at least 500 mW/cm² or at least 1000 mW/cm², in continuous mode. In greenhouses, supplementary PAR level is preferably ranging from 3 W/m² for ferns and other low light crops, to 20 W/m² for vegetable crops and propagation areas. For example, the device illuminates a crop at least 2 W/m², more preferably 5 W/m² or at 10 W/m² for 18 hours or at least 15 W/m² or at least 20W/m², or at least 50 W/m² or at least 100W/m² . The duration of light exposure is for at least 2 hours, preferably at least 8 hours, more preferably at least 12 hours, most preferably 16 hours, 18 hours, or 24 hours.

The white color LEDs may emit different wavelengths. There may be cold white LEDs emitting spectra such as in Figure 6 or there may be warm white color LED emitting spectra such as in Figure 7. According to the invention, the NIR is in range of 860 to 900nm.

According to one embodiment the NIR is provided in combination with warm white light (3000-3500K) and cool white light (5000-7000K) at wavelengths of 400 to700 nm. There are two approaches to create white light. One approach is to mix the light from several colored LEDs (Figure 8) to create a spectral power distribution that appears white.

Another approach to generating white light is the use of phosphors together with a short-wavelength LED. For example, when one phosphor material used in LEDs is illuminated by blue light, it emits yellow light having a fairly broad spectral power distribution. By incorporating the phosphor in the body of a blue LED with a peak wavelength around 450 to 470 nm, some of the blue light will be converted to yellow light by the phosphor. The remaining blue light, when mixed with the yellow light, results in white light. New phosphors are being developed to improve color rendering as shown in Figures 6 and 7.

According to the invention, the radiant output of the near infrared LED elements is between 5 and 25% of the total output.

According to one aspect of the disclosure the device of this disclosure allows for tuning the light spectrum in accordance with plant needs allowing more red or blue or NIR rays in the spectrum. This tuning may be done manually or automatically based on the developmental stage of the plant or based on the natural daily changing of sunlight, or based on the time of day.
According to one aspect of the disclosure software is provided with the lighting system that allows programming of a relay circuit board. According to a one aspect each individual spectra can be controlled with sequenced events allowing customization of intensity and duration of each specific spectrum. According to one aspect the system automatically changes the percentage of red, blue, green and NIR wavelengths according to the time of the day in a 24 hour cycle. The device may allow for tuning the light spectrum in accordance with natural daily changing of sunlight spectrum that automatically change the percentage of red, blue, green or near infrared wavelengths in the spectrum or turn the light on and off in accordance with time of day within a 24 hour cycle. In one aspect an individual spectra can be controlled with up to 999 time sequenced events, thereby allowing for maximum customization to the required intensity and duration of each specific spectrum.

This disclosure provides a device and a method to improve crop growth, yield and health by means of illuminating the plants with a combination of NIR and visible light. The plants may be selected from crop plants, medical plants, or flowering plants. The plants may be monocotyledons or dicotyledons, algae or ferns. The plants may be selected from at least the following species: barley, oat, rye, corn, strawberry, blueberry, raspberry, potato, tomato, cabbage plants, leguminous plants, cucumbers, peppers, bulbiferous plants, cannabis, fuchia, geranium, chrysantemum, rose, tulip, and amaryllis. Various other plant species can also benefit from the method described in this disclosure. The plants may be grown *in vivo* or *in vitro;* they may grow in hydroponic culture, or in soil.

The positive effects of the NIR and visible light may be measured for example as increased biomass, increased number of flowers or leaves, increased number of fruits or berries, improved content of biochemical naturally occurring in a plant species, earlier flowering, longer lasting flowering, and/or earlier production of crop.

The invention is now described in light of illustrative but non-limiting examples.

### EXAMPLE 1. Synergistic effect of NIR and white light on plant growth

Seeds of various plant species (tomato, wheat, corn, fuchsia, Germanium, etc.) were germinated in darkness. Once germinated the seedlings were transferred under a lighting device shown in Figure 9. The device comprised near infrared LED elements and white color LED elements in the PAR wavelength region. For example, a device wherein the white and near infrared LED-elements are included in alternating manner in an elongated panel or string in the direction of elongation wherein the number of white light LED elements in the device is larger than the number of near infrared-elements. More specifically, a device wherein the white light LED-elements comprise a 3500 K LED element and a 6500 K LED element wherein NIR of 850 nm maximal output (800 nm- 900 nm range) or 880 nm maximal output (800 nm- 950 nm range). The radiant output of the LED elements is preferably at least 10 mW, more preferably, it is at least 50 mW, at least 100 mW, at least 500 mW or at least 1 W. More preferably, the LEDs are high power LEDs with a radiant output of at least 5 W, at least 10 W, at least 15 W, at least 20 W, at least 25 W, at least 30 W, at least 35 W or at least 40 W. In one embodiment, the LEDs are high power LED elements with a light intensity of at least 100 mW/cm², at least 200 mW/cm², at least 300 mW/cm², at least 400 mW/cm², at least 500 mW/cm² or at least 1000 mW/cm², in continuous mode. In greenhouses, supplementary PAR level is suggested ranging from 3 W m² for ferns and other low light crops, to 20 W m² for vegetable crops and propagation areas. For example, the device illuminates a crop at least 2 W/m2, more preferably 5 W/m² or at 10 W/m² for 18 hours or at least 15 W/m2 or at least 20W/m2 or at least 50 W/m² or at least 100W/m². The duration of light exposure for at least 12 hours, more preferably 16 hours, 18 hours, or 24 hours.

**Table 1.Typical Supplementary Illumination Treatments (h) for Commercial Greenhouse Crops (various sources):**

| **Crops** | **"Long-term" range of the treatments** | **"Short-term" range of the treatments** |
|---|---|---|
| **TOMATOES (propagation)** | 12-24 | 8-15 |
| **CUCUMBERS (propagation)** | 12-24 | 8-15 |

| **PEPPERS (propagation)** | 12-24 | 8-15 |
|---|---|---|
| **FOLIAGE PLANTS** | 12-24 | 3-6 |
| **BEDDING PLANTS** | 12-24 | 5-15 |
| **CHRYSANTHEMUMS** | 12- 24 (long days) | 5-15 |
| | < 12 (short days) | |
| **ROSES** | 18-24 | 5-8 |

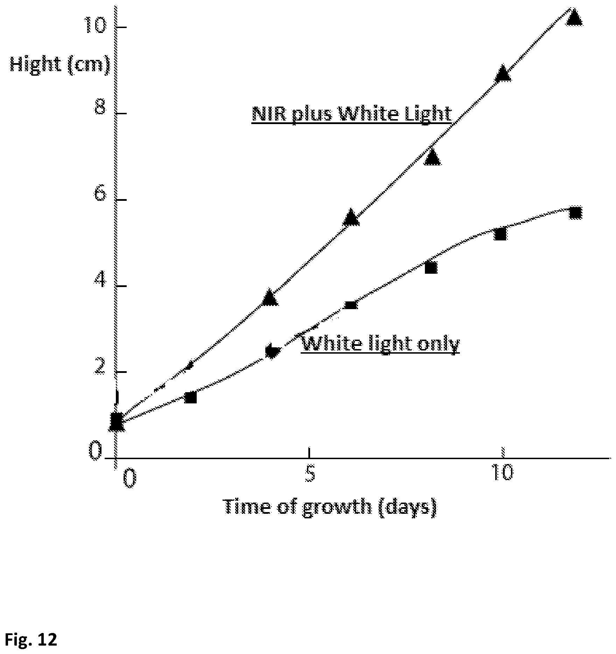

Control plants were under white color LEDs whereas the experimental plants were under a combination of NIR and white light. The spectrum of the white color LEDs was identical for both control and experimental plants. The day/night cycle was programmed to be 8 h night 16 h daylight. The growth of the seedlings was monitored by measuring the fresh and dry weight (biomass) of the seedling for a period of 14 days. The results consistently showed the NIR + white light at PAR wavelengths improving the growth of the plants as compared to the control plants grown in white color light of PAR only. Figure 12 shows a typical growth curve of the plantlets.

### EXAMPLE 2. Combination of NIR and white light improves flowering of Geranium

Geranium plants were exposed to either white light only (PAR of 400 nm - 700 nm) or NIR of 800 nm to 950 nm with an average peak of 850 nm - 880 nm and white light (PAR). The light/dark period was 16h/8h. The plants were exposed to these lighting conditions for 60 days.

The flowering of the plants exposed to the NIR+white light started on average 3 days earlier than the flowering of the plants with white light only. Moreover, the flowers of NIR+white light illuminated plants lasted fully open on average 3-5 days longer than the flowers of the plants illuminated with white light only.

### EXAMPLE 3. Combination of NIR and white light in hydroponic culture of strawberries

Strawberry plantlets are grown on hydroponic culture. The plants are illuminated with photosynthetically active radiation in combination with NIR of 800 nm to 950 nm with a peak of 850 nm - 880 nm. The day/night cycle is 16/8h. The dry biomass of the plants is measured once a day for a period of 30 days. Preliminary experiments indicate that the plants grown under PAR with 10% of NIR are expected to show the largest accumulation of dry mass. PAR plus 5% or 25% of NIR are expected to show a higher accumulation rate of dry mass than the PAR only grown plants. However, the plants grown under PAR plus 5% NIR or PAR plus 25% NIR are expected to show less biomass accumulation than the plants grown under PAR plus 10% of NIR. The plants grown under PAR with 50% of NIR did not show any improvement compared to the plants grown under PAR.

Table 2. Effect of addition of NIR to PAR on growth of strawberries in hydroponics showing dry biomass accumulation at 16h/8h daylight cycle. The results represent the growth at the end of the experimental period.

| **PAR** | **PAR with 5-7% of NIR** | **PAR with 10% of NIR** | **PAR with 25% of NIR** | **PAR with 50% of NIR** |
|---|---|---|---|---|
| **100%** | **131%** | **140%** | **125-130%** | **100-105%** |

### EXAMPLE 4. Combination of NIR, PAR and UV light in cultivation of medical cannabis

Cannabis plants are grown under light providing 10-15% UV A-light (380 to 400 nm) with UV-B light (280 to 315nm), PAR light (400 to 700 nm) and 5-15% of NIR (wavelengths 850 nm to 890 nm). The effect of UV-A light is to increase the percentage of THC in cannabis. The effect of NIR is to increase the biomass of the plants. Thus it is expected that plants grown under UV in combination with NIR will have higher biomass as well as higher concentration of TCH in the tissue. Due to this combination, the productivity of medical marijuana will be substantially increased.

### EXAMPLE 5. Combination of NIR and PAR for use with in vitro plant propagation

NIR and PAR can help to accelerate growth of plantlets in the case of *in vitro* plant propagation. An addition of UV-B of 280 to 315 nm and 5% violet of 405 nm provides some level of disinfection (2-3 log reduction of various pathogenic bacteria and fungi) and makes the plant materials pathogen-free. As a result of this lighting application, the plantlets will grow better and yield healthier plants. This combination of NIR and PAR lighting is also expected to improve the development of plantlets from genetically modified explants.

### EXAMPLE 6. Stimulation of early growth stage of bulbiferous plants

Dormant bulbs of tulips, amaryllis and daffodils are subjected to a combination of NIR and PAR lights at room temperature for day/night period of 12/12 hours. Control bulbs are subjected to PAR light only. The first green leaves emerge several days earlier from bulbs treated with a combination of NIR and PAR as compared to bulbs treated with PAR only.

### EXAMPLE 7. Stimulation of growth of crop plants

Ten days old organic barley, oat and wheat seedlings or 'Cereals' were planted in 2"x4" pots and alfalfa sprouts in plastic containers. Light was adjusted 6" above the plants. Control light is LED T8 tube of 6000K (as a source of PAR), NIR 7% of power output + PAR, LED T8 tube of 6000K and NIR 50% of power output + PAR (LED T8tube of 6000K). Plant growth was monitored as total biomass accumulation. Growth was stimulated with a low percentage of NIR (31% increase in biomass accumulation with 7% of NIR). High percentage of NIR (approx. 50%) did not show any significant benefits in plant growth in these tests.

### EXAMPLE 8. Stimulation of growth of Chrysanthemum plants

Plastic pots with artificial compost soil mix having plantlets of Chrysanthemum coming from plant tissue were placed in greenhouse tunnel covered by a plastic for growing. PAR and NIR illumination was provided to the plants from about 20 cm distance. A control treatment was placed in a separate compartment of the tunnel. Plant growth was measured at weeks 3 and 5 and plant height, number of leaves per plant and plant survival will be registered at that time. The difference in plant growth between control and NIR-PAR treated plants was 25%-30% in favor of the NIR+PAR treatment.

### EXAMPLE 9. A lighting system for growing tomatoes in a greenhouse

A lighting system including LED lamps providing near infrared (840-960 nm), red light (660 nm), blue light (450 nm) and white light with photosynthetically active radiation profile between 400 and 700 nm. The lighting system is programmed as follows:

### OPERATING CYCLE LIGHTS LEDS

| **Hour Time** | **COLORS** | | | |
|---|---|---|---|---|
| | **NIR** | **Red** | **Blue** | **White** |
| 6:00-7:00 AM | ON | ON | OFF | OFF |
| 7:00 -9:00AM | ON | ON | OFF | ON |
| 9:00 AM-6:00PM | OFF | ON | ON | ON |
| 6:00 -8:00 PM | OFF | ON | ON | ON |
| 8:00 -9:00 PM | ON | ON | ON | ON |
| 9:00 -11:00 PM | ON | ON | OFF | ON |
| 11:00 PM-12:AM | ON | ON | OFF | OFF |
| 12:00 -6:00 AM | OFF | OFF | OFF | OFF |
| 6:00 AM | ON | ON | OFF | OFF |

Accordingly, the plants are illuminated with NIR during early morning hours and late evening hours in combination with red light and/or photosynthetically active light. The plants are exposed to blue light in combination with the photosynthetically active white light during late morning, daytime and early evening. The photosynthetically active light is on between 7 AM and 10 AM. The plants are without any light between 12 to 5:30 AM. The plants are exposed to NIR between 6.00- 8.30 in the morning and 8.00-11.30 PM. This light cycle improves the growth of the tomato plants. The dry mass as well as the production of fruits is higher in these plants as compared with plants otherwise having the same light conditions except that they do not receive the NIR.

## Claims

1. A method for stimulation of plant growth, which method comprises simultaneously illuminating the plants with near infrared light and white light emitted by one or more LED elements, **characterized in that**
the radiant output on the LED elements with near infrared radiation (NIR) ranges from 840 nm to 960 nm, and
wherein radiant output of the near infrared LED elements is between 5 and 25% of total radiant output.

2. The method according to claim 1, wherein the white light is a combination of warm white light (3000 - 3500K) and cold white light (5000 - 7000K) of the wavelengths range 400 nm - 700 nm.

3. The method according to claim 1 or 2, wherein the white light is provided in a combination with UV-A, and UV-B and is a selection of violet, blue, green, orange, and red colors of wavelength of 400 nm-700nm.

4. The method according to anyone of claims 1 - 2, wherein the white light is provided in a combination with UV-A and is a selection of violet, blue, green, orange and red colors of the wavelengths range 400 nm-700 nm.

5. The method of anyone of the preceding claims, wherein the plant is an edible plant.

6. The method of anyone of claims 1-5, wherein the plant is a flowering species.

7. A device for stimulating plant growth by illuminating plants using NIR, wherein the device comprises one or more LED elements and a power for the LED elements, wherein said LED-elements comprise color LEDs at photosynthetically active radiation (PAR) light wavelengths of 400-700 nm and near infrared LED elements **characterized in that** the near infrared LED elements are ranging from 840 nm to 960 nm, whereby radiant output of the near infrared LED elements is in 5 to 25% range of total radiant output.

8. The device according to claim 7, wherein the white and near infrared LED-elements are included in alternating manner in an elongated panel or string in the direction of elongation.

9. The device according to claim 7 or 8, wherein the device is a flexible string.

10. The device according to anyone of claims 7 - 9, wherein number of white light LED elements in the device is larger than number of near infrared LED-elements.

11. The device according to claim 10, wherein the number of white light LED elements is 4-20 times larger than the number of near infrared LED elements.

12. The device according to claim 7 for by illuminating plants using NIR at wavelengths 840-960 nm and other colors of PAR, wherein the device allows for tuning a light spectrum in accordance with plant needs allowing for more red or blue or near infrared rays in the spectrum.

13. The device of claim 12, wherein the device allows for tuning the light spectrum in accordance with natural daily changing of sunlight spectrum that automatically change the percentage of red, blue, green or near infrared wavelengths in the spectrum or turn the light on and off in accordance with time of day within a 24 hour cycle.

14. The device of claim 12 or 13, wherein the tuning is automated by incorporating a circuit based programmable automated relay circuit board in the device.

15. The device of anyone of claims 12 - 14, wherein an individual spectra can be controlled with up to 999 time sequenced events, thereby allowing for maximum customization to the required intensity and duration of each specific spectrum.

## Patentansprüche

1. Verfahren zur Stimulierung des Pflanzenwachstums, wobei das Verfahren das gleichzeitige Beleuchten der Pflanzen mit Nahinfrarot-Licht und Weißlicht umfasst, das von einem oder mehreren LED-Elementen emittiert wird, **dadurch gekennzeichnet, dass** die Strahlungsleistung der LED-Elemente mit Nahinfrarot-Strahlung (NIR) im Bereich von 840 nm bis 960 nm liegt, und wobei die Strahlungsleistung der Nahinfrarot-LED-Elemente zwischen 5 und 25% der gesamten Strahlungsleistung beträgt.

2. Verfahren nach Anspruch 1, wobei das Weißlicht eine Kombination aus warmweißem Licht (3000 - 3500 K) und kaltweißem Licht (5000 - 7000 K) des Wellenlängenbereichs 400 nm - 700 nm ist.

3. Verfahren nach Anspruch 1 oder 2, wobei das Weißlicht in Kombination mit UV-A und UV-B bereitgestellt wird und eine Auswahl von violetten, blauen, grünen, orangen und roten Farben mit einer Wellenlänge von 400 nm-700 nm ist.

4. Verfahren nach einem der Ansprüche 1 bis 2, wobei das Weißlicht in Kombination mit UV-A bereitgestellt wird und eine Auswahl an violetten, blauen, grünen, orangen und roten Farben des Wellenlängenbereichs 400 nm-700 nm ist.

5. Verfahren nach einem der vorhergehenden Ansprüche, wobei die Pflanze eine essbare Pflanze ist.

6. Verfahren nach einem der Ansprüche 1 bis 5, wobei die Pflanze eine blühende Spezies ist.

7. Vorrichtung zum Stimulieren des Pflanzenwachstums durch Beleuchten von Pflanzen unter Verwendung von NIR, wobei die Vorrichtung ein oder mehrere LED-Elemente und eine Stromversorgung für die LED-Elemente umfasst, wobei die LED-Elemente Farb-LEDs bei photosynthetischer aktiver Strahlung (PAR) Lichtwellenlängen von 400-700 nm und Nahinfrarot-LED-Elemente umfassen, **dadurch gekennzeichnet, dass** die Nahinfrarot-LED-Elemente im Bereich von 840 nm bis 960 nm liegen,
wodurch die Strahlungsleistung der Nahinfrarot-LED-Elemente im Bereich von 5 bis 25% der Gesamtstrahlungsleistung liegt.

8. Vorrichtung nach Anspruch 7, **dadurch gekennzeichnet, dass** die Weiß- und Nahinfrarot-LED-Elemente in Längsrichtung abwechselnd in einer langgestreckten Platte oder Schnur enthalten sind.

9. Vorrichtung nach Anspruch 7 oder 8, wobei die Vorrichtung eine flexible Schnur ist.

10. Vorrichtung nach einem der Ansprüche 7 bis 9, wobei die Anzahl der Weißlicht-LED-Elemente in der Vorrichtung größer ist als die Anzahl der Nahinfrarot-LED-Elemente.

11. Vorrichtung nach Anspruch 10, wobei die Anzahl der Weißlicht-LED-Elemente 4-20 mal größer ist als die Anzahl der Nahinfrarot-LED-Elemente.

12. Vorrichtung nach Anspruch 7 zum Beleuchten von Pflanzen mittels NIR bei Wellenlängen 840-960 nm und anderen Farben von PAR, wobei die Vorrichtung das Abstimmen eines Lichtspektrums gemäß den Pflanzenbedürfnissen ermöglicht, was mehr rote oder blaue oder Nahinfrarot-Strahlen im Spektrum ermöglicht.

13. Vorrichtung nach Anspruch 12, wobei die Vorrichtung das Abstimmen des Lichtspektrums gemäß der natürlichen täglichen Änderung des Sonnenlichtspektrums ermöglicht, die automatisch den Prozentsatz der roten, blauen, grünen oder nahen Infrarot-Wellenlängen im Spektrum ändern oder das Licht je nach Tageszeit innerhalb eines 24-Stunden-Zyklus ein- und ausschalten.

14. Vorrichtung nach Anspruch 12 oder 13, wobei die Abstimmung automatisiert wird, indem eine schaltungsbasierte programmierbare automatisierte Relaisplatine in die Vorrichtung eingebaut wird.

15. Vorrichtung nach einem der Ansprüche 12 bis 14, wobei ein einzelnes Spektren mit bis zu 999 zeitlich aufeinanderfolgenden Ereignissen gesteuert werden kann, wodurch eine maximale Anpassung an die erforderliche Intensität und Dauer jedes spezifischen Spektrums ermöglicht wird.

## Revendications

1. Procédé de stimulation de la croissance des plantes, ledit procédé comprend l'éclairage simultané des plantes à l'aide d'une lumière dans le proche infrarouge et d'une lumière blanche émises par un ou plusieurs éléments DEL,
**caractérisé en ce que** la sortie de rayonnement sur les éléments DEL avec un rayonnement dans le proche infrarouge (NIR) est dans la plage comprise entre 840 nm et 960 nm, et
dans lequel la sortie de rayonnement des éléments DEL dans le proche infrarouge représente 5 à 25 % de la sortie de rayonnement totale.

2. Procédé selon la revendication 1, dans lequel la lumière blanche est une association de lumière blanche chaude (3 000 à 3 500 K) et de lumière blanche froide (5 000 à 7 000 K) de la gamme de longueurs d'onde de 400 nm à 700 nm.

3. Procédé selon la revendication 1 ou 2, dans lequel la lumière blanche est fournie en association avec UV-A et UV-B et est une sélection de couleurs violette, bleue, verte, orange et rouge de longueur d'onde de 400 nm à 700 nm.

4. Procédé selon l'une quelconque des revendications 1 et 2, dans lequel la lumière blanche est fournie en association avec UV-A et est une sélection de couleurs violette, bleue, verte, orange et rouge de la gamme de longueurs d'onde de 400 nm à 700 nm.

5. Procédé selon l'une quelconque des revendications précédentes, dans lequel la plante est une plante comestible.

6. Procédé selon l'une quelconque des revendications 1 à 5, dans lequel la plante est une espèce à fleurs.

7. Dispositif permettant de stimuler la croissance des plantes en éclairant les plantes à l'aide du NIR, dans lequel le dispositif comprend un ou plusieurs éléments DEL et une alimentation pour les éléments DEL, dans lequel lesdits éléments DEL comprennent des DEL de couleur à des longueurs d'onde lumineuses de rayonnement photosynthétiquement actif (PAR) de 400 à 700 nm et des éléments DEL dans le proche infrarouge, **caractérisé en ce que** les éléments DEL dans le proche infrarouge sont dans la plage comprise entre 840 nm et 960 nm,
la sortie de rayonnement des éléments DEL dans le proche infrarouge représentant 5 à 25 % de la sortie de rayonnement totale.

8. Dispositif selon la revendication 7, dans lequel les éléments DEL blancs et dans le proche infrarouge sont inclus de manière alternée dans un panneau ou une chaîne allongée dans le sens de l'allongement.

9. Dispositif selon la revendication 7 ou 8, dans lequel le dispositif est une chaîne flexible.

10. Dispositif selon l'une quelconque des revendications 7 à 9, dans lequel le nombre d'éléments DEL de lumière blanche dans le dispositif est supérieur au nombre d'éléments DEL dans le proche infrarouge.

11. Dispositif selon la revendication 10, dans lequel le nombre d'éléments DEL de lumière blanche est 4 à 20 fois supérieur au nombre d'éléments DEL dans le proche infrarouge.

12. Dispositif selon la revendication 7 permettant d'éclairer des plantes à l'aide du NIR à des longueurs d'onde de 840 à 960 nm et d'autres couleurs de PAR, dans lequel le dispositif permet de régler un spectre lumineux en fonction des besoins de la plante permettant ainsi d'avoir davantage de rayons rouges ou bleus ou dans le proche infrarouge dans le spectre.

13. Dispositif selon la revendication 12, dans lequel le dispositif permet le réglage du spectre lumineux en fonction du changement naturel quotidien du spectre de la lumière solaire qui modifie automatiquement le pourcentage de longueurs d'onde rouge, bleue, verte ou dans le proche infrarouge dans le spectre ou allume et éteint la lumière en fonction de l'heure du jour dans un cycle de 24 heures.

14. Dispositif selon la revendication 12 ou 13, dans lequel le réglage est automatisé en intégrant une carte de circuit de relais automatisée, programmable et basée sur un circuit dans le dispositif.

15. Dispositif selon l'une quelconque des revendications 12 à 14, dans lequel un spectre individuel peut être commandé avec jusqu'à 999 événements séquencés dans le temps, permettant ainsi une personnalisation maximale de l'intensité et de la durée requises de chaque spectre spécifique.
